# EUROPEAN PATENT APPLICATION

(11) **EP 3 313 039 A1**
(43) Date of publication of application: **25.04.2018**
(21) Application number: 16751889.3
(22) Date of filing: 18.01.2016
(51) Int. Cl.: H04L 29/06

(54) **HOME GATEWAY, COMMUNICATION MANAGEMENT METHOD AND COMMUNICATION SYSTEM THEREOF**

(30) Priority: 22.07.2015 CN 201510436062
(71) Applicant: ZTE Corporation, Shenzhen, Guangdong 518057 (CN)
(72) Inventor: LIU, Haiming, Shenzhen Guangdong 518057 (CN)
(74) Representative: HGF Limited
(86) International application number: PCT/CN2016/071228
(87) International publication number: WO 2016/131358

(57) **Abstract**

Disclosed are a home gateway, a communication management method and a communication system thereof. A network management server in an embodiment of the present invention is not directly exposed to a user, and when the home gateway is to connect to the network management server, the home gateway connects to a redirection server through redirection server connection information at first, and after receiving real connection information of the network management server sent by the redirection server, the home gateway may really connect to the network management server according to the real connection information of the network management server.

## Description

### Technical Field

The present application relates to, but is not limited to, the field of communications.

### Background

Along with development of a wideband network, an intelligent home gateway has entered homes of ordinary users. The intelligent home gateway enables home gateway equipment to access the Internet by dialing by virtue of a computer network technology, and is connected to a network management platform through a Customer Premise Equipment (CPE) Wide Area Network (WAN) management protocol (CWMP, called as TR069 for short) or another Transmission Control Protocol (TCP)-based protocol, thereby achieving purposes of remote management and remote monitoring.

However, along with continuous increase of the number of terminal users, operation pressure of a network management server is increased. Particularly, since a network management platform in a communication system of a related technology is directly exposed to users, it results in easy access of some illegal terminals, and operation pressure of a network management platform server is further increased on the other hand. Even when a current network is sensitive to security, if these illegal terminals maliciously attack the network management server, the network management server paralysis may be resulted, and remote control over a home gateway and normal placement mounting may not be implemented.

### Summary

The below is a summary about a subject described in detail in the present disclosure. The summary is not intended to limit the scope of protection of the claims.

The present disclosure provides a home gateway, a communication management method and a communication system thereof, to solve the problem of potential safety hazards caused by direct exposure of a network management platform to users in a communication system of the related technology.

An embodiments of the present invention provides a communication management method for a home gateway, herein a process of connecting a home gateway to a network management server includes that:
the home gateway connects to a redirection server through redirection server connection information;
the home gateway receives real connection information of the network management server sent by the redirection server; and
the home gateway connects to the network management server according to the real connection information of the network management server.

In an embodiment of the present invention, after the home gateway connects to the redirection server and before the real connection information of the network management server is received, the method further includes that: first authentication information is sent to the redirection server, the real connection information of the network management server is sent by the redirection server after authentication based on the first authentication information succeeds.

In an embodiment of the present invention, the real connection information of the network management server includes address information of the network management server and a redirection attribute value, and the redirection attribute value includes a permanent setting and a temporary setting;
after the home gateway receives the real connection information of the network management server sent by the redirection server and before the home gateway connects to the network management server according to the real connection information of the network management server, the method further includes that: the home gateway sets a redirection attribute of the address information of the network management server according to the redirection attribute value; and
that the home gateway connects to the network management server according to the real connection information of the network management server includes that: the home gateway connects to the network management server according to the address information of the network management server.

In an embodiment of the present invention, that the home gateway connects to the network management server according to the address information of the network management server includes that:
the home gateway sends second authentication information to the network management server according to the address information of the network management server; and
after an authentication success response message fed back by the network management server is received, the home gateway connects to the network management server in a certificate encryption mode.

In an embodiment of the present invention, before the home gateway connects to the redirection server through the redirection server connection information, the method further includes that:
the home gateway connects to an authentication server through false connection information of the network management server, and sends third authentication information to the authentication server;
the home gateway receives a redirection server connection right fed back by the authentication server after authentication based on the third authentication information succeeds; and
after the redirection server connection right is received, the home gateway initiates a connection to the redirection server according to the redirection server connection information.

An embodiment of the present invention provides a communication management method for a home gateway, herein a process of connecting a home gateway to a network management server including that:
the home gateway connects to a redirection server through redirection server connection information;
the redirection server sends real connection information of the network management server to a home network; and
the home gateway connects to the network management server according to the real connection information of the network management server.

An embodiment of the present invention further provides a home gateway, which includes a communication connection management unit and a redirection management unit, herein
the redirection management unit is configured to: connect to a redirection server through redirection server connection information and receive real connection information of a network management server sent by the redirection server; and
the communication connection management unit is configured to: connect to the network management server according to the real connection information of the network management server.

In an embodiment of the present invention, the redirection management unit is further configured to: after connecting to the redirection server and before receiving the real connection information of the network management server, send first authentication information to the redirection server, herein the real connection information of the network management server is sent by the redirection server after authentication based on the first authentication information succeeds.

In an embodiment of the present invention, the real connection information of the network management server includes address information of the network management server and a redirection attribute value, and the redirection attribute value includes a permanent setting and a temporary setting; the redirection management unit is further configured to: set a redirection attribute of the address information of the network management server according to the redirection attribute value; and
the communication connection management unit is configured to: after the redirection management unit completes setting of the redirection attribute of the address information of the network management server, connect to the network management server according to the address information of the network management server.

In an embodiment of the present invention, the communication connection management unit is configured to:
send second authentication information to the network management server according to the address information of the network management server; and
after an authentication success response message fed back by the network management server is received, connect to the network management server in a certificate encryption mode.

In an embodiment of the present invention, the communication connection management unit is further configured to: before the redirection management unit connects to the redirection server through the redirection server connection information, connect to an authentication server through false connection information of the network management server, send third authentication information to the authentication server, and receive a redirection server connection right fed back by the authentication server after authentication based on the third authentication information succeeds; and
the redirection management unit is further configured to: after the redirection server connection right is received, initiate a connection to the redirection server according to the redirection server connection information.

An embodiment of the present invention further provides a communication system, which includes a home gateway, a redirection server and a network management server, herein
the home gateway is configured to: connect to the redirection server through redirection server connection information;
the redirection server is configured to: send real connection information of the network management server to a home network; and
the home gateway is further configured to: connect to the network management server according to the real connection information of the network management server.

An embodiment of the present invention further provides a computer-readable storage medium, storing computer-executable instructions, which are used to execute any abovementioned method.

According to the home gateway, communication management method and communication system thereof provided by the embodiments of the present invention, the network management server is not directly exposed to a user, and when the home gateway is to connect to the network management server, the home gateway is needed to connect to the redirection server through the redirection server connection information at first, then skips to the real connection information of the network management server after receiving the real connection information of the network management server sent by the redirection server, and may really connect to the network management server according to the real connection information of the network management server. Compared with a method of directly exposing the network management server to the user in the related technology, the embodiments of the present invention may skip for connecting to the real network management server after redirection is successfully implemented through the redirection server, additional operation pressure on the network management server and potential safety hazards caused by easy access of an illegal terminal may be avoided, and a satisfaction with a user experience may be improved.

After the drawings and the detailed descriptions are read and understood, the other aspects may be comprehended.

### Brief Description of Drawings

FIG. 1 is a flowchart of a communication management method for a home gateway according to embodiment 1 of the present invention.
FIG. 2 is a flowchart of a first authentication process of a home gateway according to embodiment 1 of the present invention.
FIG. 3 is a flowchart of a last authentication process of a home gateway according to embodiment 1 of the present invention.
FIG. 4 is a structure diagram of a communication system according to embodiment 2 of the present invention.
FIG. 5 is a structure diagram of a home gateway according to embodiment 2 of the present invention.
FIG. 6 is a structure diagram of a home gateway according to embodiment 3 of the present invention.
FIG. 7 is a flowchart of a communication management method for a home gateway according to embodiment 3 of the present invention.
FIG. 8 is a flowchart of connecting a home gateway to a network management server according to embodiment 3 of the present invention.

### Detailed Description

Implementation modes of the present invention will be described below in combination with the drawings.

### Embodiment 1

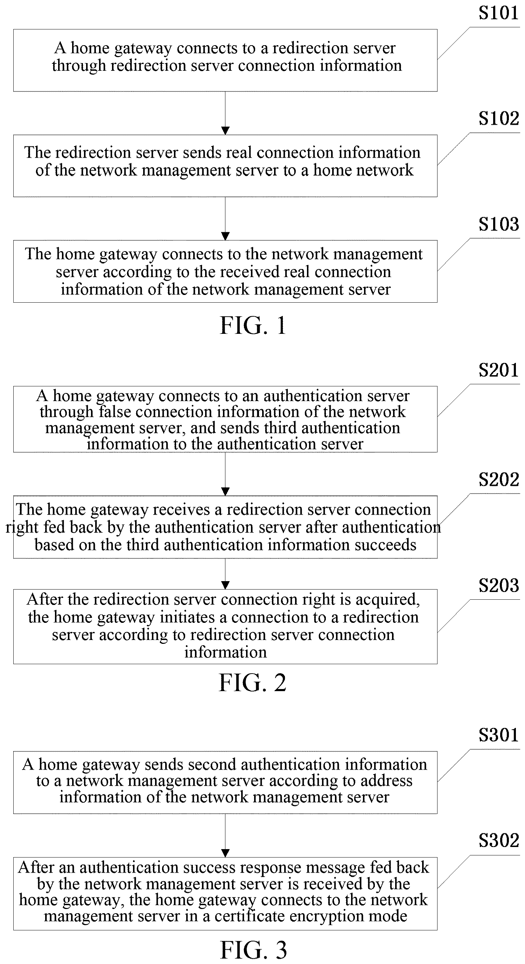

A network management server in the embodiment is not directly exposed to a user, and when a home gateway is to connect to the network management server, the home gateway connects to a redirection server through redirection server connection information at first, then skips to real connection information of the network management server after receiving the real connection information of the network management server sent by the redirection server, and may really connect to the network management server according to the real connection information of the network management server. Additional operation pressure on the network management server and potential safety hazards caused by easy access of an illegal terminal may be avoided. Such a process refers to FIG. 1, and includes the following steps.

In Step 101, a home gateway connects to a redirection server through redirection server connection information.

The redirection server connection information in the embodiment includes a redirection server connection address, and the redirection server connection information may be pre-stored in the home gateway, and may also be temporally acquired when a user is needed to connect to a network management server.

In Step 102, the redirection server sends real connection information of the network management server to a home network.

In Step 103, the home gateway connects to the network management server according to the received real connection information of the network management server.

In addition, a conventional remote management system directly connects to the network management server without certificate authentication, which is lack of security and operation efficiency and also causes direct exposure of a network management platform to the user on the other hand and further causes hidden dangers in terms of network security. Therefore, the redirection server in the embodiment may further authenticate the home gateway initiating a connection to the redirection server, feeds back the real connection information of the network management server to the home gateway only after authentication succeeds. In case of an authentication failure, the redirection server considers it as an illegal terminal and does not feed back any real connection information of the network management server. At this moment, the home gateway in the embodiment further sends first authentication information to the redirection server after connecting to the redirection server, and the redirection server sends the real connection information of the network management server to the home gateway only after successfully authenticating the home gateway on the basis of the first authentication information. In such a mode, adding an authentication mechanism may further improve the network security.

In order to further improve the network security, security authentication may be performed on the home gateway even before the home gateway connects to the redirection server in the embodiment. Only the home gateway which passes authentication may acquire a right of connecting to the redirection server, and the home gateway which does not pass authentication has no right of connecting to the redirection server, and namely may not acquire the real connection information of the network management server. In the embodiment, since such authentication is executed in the first step when the home gateway triggers connection to the network management server, connection information of an authentication server executing such authentication may be set to be false connection information of the network management server, then it is still network management server connection information presented to the terminal user, and the user is unaware of a subsequent execution process. Therefore, a satisfaction with a user experience and security may be improved. At this moment, before the home gateway connects to the redirection server through the redirection server connection information, a first authentication process shown in FIG. 2 is further included, including the following steps.

In Step 201, the home gateway connects to an authentication server through false connection information of the network management server, and sends third authentication information to the authentication server.

In Step 202, the home gateway receives a redirection server connection right fed back by the authentication server after authentication based on the third authentication information succeeds.

In Step 203, after acquiring the redirection server connection right, the home gateway initiates a connection to the redirection server according to the redirection server connection information.

In the embodiment, after the redirection server successfully authenticates the home gateway according to the first authentication information sent by the home gateway, the real connection information of the network management server fed back by the redirection server includes address information of the network management server and a redirection attribute value, and the redirection attribute value is a permanent setting or a temporary setting.

The home gateway sets a redirection attribute of the address information of the network management server according to the redirection attribute value, that is, when the redirection attribute value is the permanent setting, the home gateway internally permanently sets address information of the network management server to be the address information of the network management server, and the home gateway does not need to be reoriented when connecting to the network management server next time; and when the redirection attribute value is the temporary setting, the home gateway internally temporally sets address information of the network management server to be the address information of the network management server, and the home gateway needs to be reoriented again when connecting to the network management server next time.

In the embodiment, in order to further improve the network connection security, when the home gateway connects to the network management server after acquiring the real connection information of the network management server, the network management server may further perform last authentication on the home gateway, and establish the connection with the home gateway only after authentication succeeds. Such a process refers to FIG. 3, and includes the following steps.

In Step 301, the home gateway sends second authentication information to the network management server according to the address information of the network management server.

In Step 302, after an authentication success response message fed back by the network management server is received by the home gateway, the home gateway connects to the network management server in a certificate encryption mode.

It should be understood that contents included in the first authentication information, second authentication information and third authentication information in the embodiment are determined by factors such as an authentication mechanism used by an authentication party. In addition, the first authentication information and third authentication information in the embodiment may be the same, and may also be different, and the second authentication information may also be the same as or different from the first authentication information and/or the third authentication information. That is, each authentication party in the embodiment may be mutually independent, and may also share authentication information; the first authentication information, second authentication information and third authentication information in the embodiment may use a form of certificate chain. For example, the first authentication information and the third authentication information use a root certificate in the certificate chain, and the second authentication information uses a child certificate in the certificate chain. Of course, no certificate chain may be used, and instead, a single certificate or another form is directly used for implementation.

In addition, it should be understood that redirection in the embodiment is not limited to redirecting once, and for further improving the security, redirection may be performed for many times as needed. Authentication may also be performed once more or for many times as needed. Authentication information used for each redirection may be the same, and may also be different.

Home gateway equipment in the embodiment includes, but is not limited to, a network camera device, network storage equipment, Personal Computer (PC) equipment, other home equipment supporting network control and the like.

### Embodiment 2

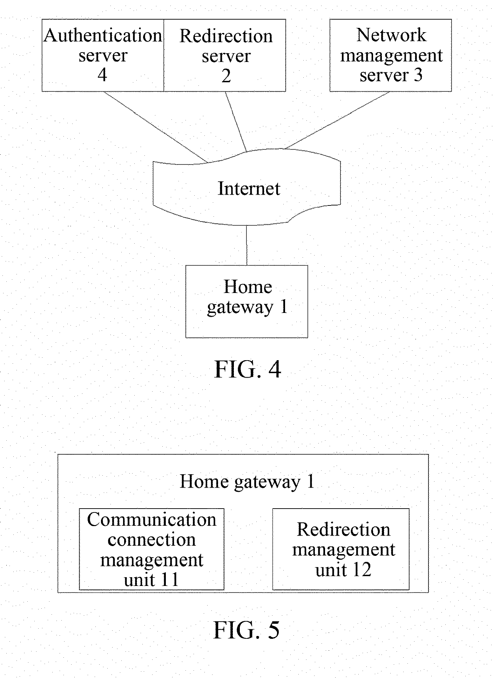

With reference to FIG. 4, a communication system provided by the embodiment includes a home gateway 1, a redirection server 2 and a network management server 3.

The home gateway 1 is configured to: connect to the redirection server 2 through redirection server connection information, receive real connection information of the network management server fed back by the redirection server 2, and connect to the network management server 3 according to the received real connection information of the network management server.

The redirection server connection information in the embodiment includes a connection address of the redirection server 2, and the redirection server connection information may be pre-stored in the home gateway 1, and may also be temporally acquired when a user is needed to connect to the network management server 3.

A conventional remote management system directly connects to the network management server 3 without certificate authentication, which is lack of security and operation efficiency and also causes direct exposure of a network management platform to the user on the other hand and further causes hidden dangers in terms of network security. Therefore, the redirection server 2 in the embodiment may further be configured to: authenticate the home gateway 1 initiating a connection to the redirection server 2, feed the real connection information of the network management server back to the home gateway 1 only after authentication succeeds, and in case of an authentication failure, consider the home gateway 1 as an illegal terminal and not feed any real connection information of the network management server back to the home gateway 1. At this moment, the home gateway 1 in the embodiment further sends first authentication information to the redirection server 2 after connecting to the redirection server 2, and the redirection server 2 sends the real connection information of the network management server to the home gateway 1 only after successfully authenticating the home gateway 1 on the basis of the first authentication information. In such a mode, adding an authentication mechanism may further improve the network security.

In order to further improve the network security, security authentication may be performed on the home gateway 1 even before the home gateway 1 connects to the redirection server 2 in the embodiment, and only the home gateway 1 which passes authentication may acquire a right of connecting to the redirection server 2, otherwise the home gateway 1 has no right of connecting to the redirection server 2, and namely it may not acquire the real connection information of the network management server 3. The communication system in the embodiment may further include an authentication server 4 configured to execute the authentication process. Meanwhile, considering that such authentication is executed in the first step when the home gateway 1 triggers connection to the network management server 3, connection information of the authentication server 4 executing such authentication may be set to be false connection information of the network management server, then it is still connection information of the network management server 3 presented to the terminal user, and the user is unaware of a subsequent execution process. Therefore, a satisfaction with a user experience and security may be improved. The authentication process is as follows:
the home gateway 1 connects to the authentication server 4 through the false connection information of the network management server, and sends third authentication information to the authentication server 4;
the home gateway 1 receives a redirection server 2 connection right fed back by the authentication server 4 after authentication based on the third authentication information succeeds; and
after the redirection server 2 connection right is acquired by the home gateway 1, the home gateway 1 initiates a connection to the redirection server 2 according to the redirection server 2 connection information.

In the embodiment, after the redirection server 2 successfully authenticates the home gateway 1 according to the second authentication information sent by the home gateway 1 the real connection information of the network management server fed back by the redirection server 2 includes address information of the network management server 3 and a redirection attribute value, and the redirection attribute value is a permanent setting or a temporary setting.

The home gateway 1 is further configured to: set a redirection attribute of address information of the network management server 3 according to the redirection attribute value, that is, when the redirection attribute value is the permanent setting, the home gateway 1 internally permanently sets address information of the network management server 3 to be the address information of the network management server 3, and the home gateway 1 does not need to be reoriented when connecting to the network management server 3 next time; and when the redirection attribute value is the temporary setting, the home gateway 1 internally temporally sets address information of the network management server 3 to be the address information of the network management server 3, and the home gateway 1 needs to be reoriented again when connecting to the network management server 3 next time.

In the embodiment, in order to further improve the network connection security, when the home gateway 1 connects to the network management server 3 after acquiring the real connection information of the network management server, the network management server 3 may further be configured to: perform last authentication on the home gateway 1, and establish the connection with the home gateway 1 only after authentication succeeds. Such a process is as follows:
the home gateway 1 sends second authentication information to the network management server 3 according to address information of the network management server 3; and
after an authentication success response message fed back by the network management server 3 is received by the home gateway 1, the home gateway 1 connects to the network management server 3 in a certificate encryption mode.

With reference to FIG. 5, the home gateway in the embodiment includes a communication connection management unit 11 and a redirection management unit 12.

The redirection management unit 12 is configured to: connect to a redirection server 2 through redirection server connection information and receive real connection information of the network management server sent by the redirection server 2.

The communication connection management unit 11 is configured to: connect to a network management server 3 according to the real connection information of the network management server.

The redirection management unit 12 is further configured to: after connecting to the redirection server 2 and before receiving the real connection information of the network management server, send first authentication information to the redirection server 2, the real connection information of the network management server is sent by the redirection server 2 after authentication based on the first authentication information succeeds. In case of an authentication failure, the home gateway 1 is considered as an illegal terminal. The real connection information of the network management server fed back by the redirection server 2 includes address information of the network management server and a redirection attribute value, and the redirection attribute value includes a permanent setting and a temporary setting; and the redirection management unit 12 is further configured to: set a redirection attribute of the address information of the network management server according to the redirection attribute value. When the redirection attribute value is the permanent setting, address information of the network management server in the home gateway is permanently set to be the address information of the network management server, and the home gateway does not need to be reoriented when connecting to the network management server next time; and when the redirection attribute value is the temporary setting, address information of the network management server in the home gateway is temporally set to be the address information of the network management server, and the home gateway needs to be reoriented again when connecting to the network management server next time.

The communication connection management unit 11 connects to the network management server according to the address information of the network management server after the redirection management unit 12 completes setting of the redirection attribute of the address information of the network management server. A connection process includes that:
the communication connection management unit 11 sends second authentication information to the network management server according to the address information of the network management server; and
after an authentication success response message fed back by the network management server is received, the communication connection management unit 11 connects to the network management server in a certificate encryption mode.

In an embodiment, for further improving the network security, the communication connection management unit 11 is further configured to: before the redirection management unit 12 connects to the redirection server 2 through the redirection server connection information, connect to an authentication server 4 through false connection information of the network management server at first, send third authentication information to the authentication server 4, and receive a redirection server connection right fed back by the authentication server 4 after authentication based on the third authentication information succeeds; and the redirection management unit 12 is further configured to: after the redirection server connection right is received, initiate a connection to the redirection server 2 according to the redirection server connection information.

Contents included in the first authentication information, second authentication information and third authentication information in the embodiment are determined by factors such as an authentication mechanism used by an authentication party. In addition, the first authentication information and third authentication information in the embodiment may be the same, and may also be different, and the second authentication information may also be the same as or different from the first authentication information and/or the third authentication information. That is, each authentication party in the embodiment (for example, the authentication server executing authentication, the redirection server and the network management server) may be mutually independent, and may also share authentication information; and the first authentication information, second authentication information and third authentication information in the embodiment may use a form of certificate chain, and at this moment, the home gateway in the embodiment may include a certificate chain unit.

### Embodiment 3

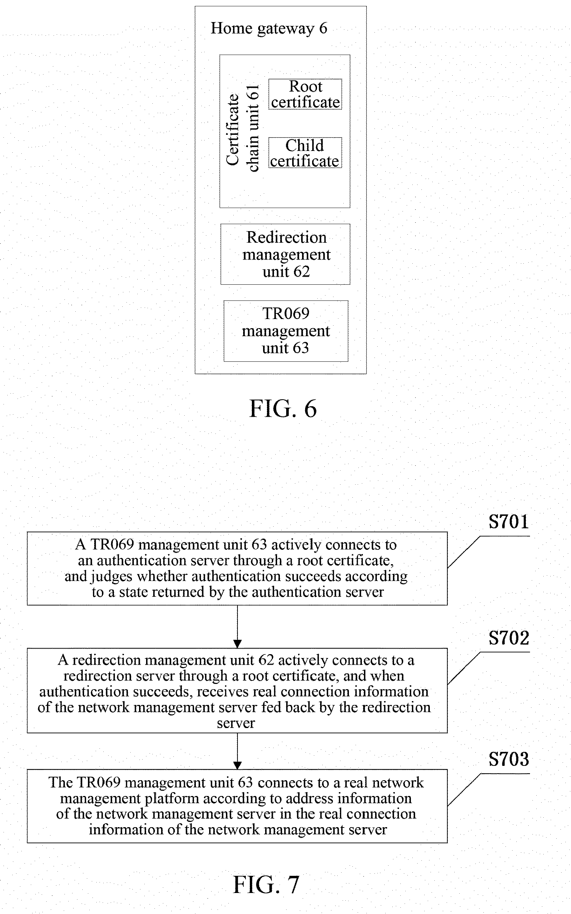

Descriptions will be made below with a home gateway as an example. With reference to FIG. 6, the home gateway 6 in the example includes a certificate chain unit 61, a redirection management unit 62 and a TR069 management unit 63 (corresponding to the communication connection management unit), the abovementioned first authentication information and third authentication information are implemented through a root certificate in an authentication chain, and the second authentication information is implemented by a child certificate in the authentication chain. In the embodiment, a certificate chain is preset through the certificate chain unit 61, and the corresponding certificates are imported. After addition of the certificate chain is completed, the TR069 management unit 63 is notified, and the TR069 management unit 63 may connect false connection information of the network management server by virtue of the root certificate, and then the home gateway may normally connect to a network management platform according to the following steps. With reference to FIG. 7, the following steps are included.

In Step 701, the TR069 management unit 63 actively connects to an authentication server through the root certificate, and judges whether authentication succeeds according to a state returned by the authentication server.

In Step 702, after authentication succeeds, a redirection server connection right may be acquired, and the redirection management unit 62 actively connects to the redirection server through the root certificate, receives real connection information of the network management server fed back by the redirection server when authentication succeeds, otherwise the connection fails.

In Step 703, the TR069 management unit 63 connects to a real network management platform according to address information of the network management server in the real connection information of the network management server.

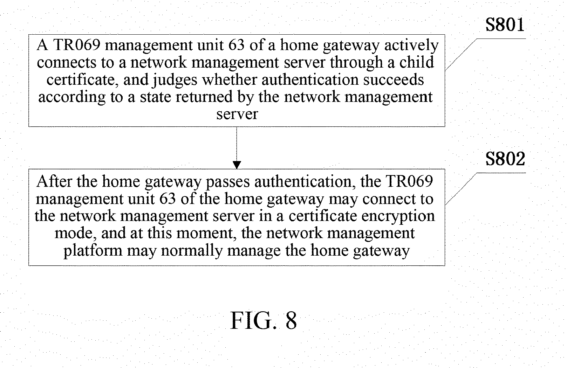

In the abovementioned Step 703, before the real network management platform is connected, the redirection management unit 62 of the home gateway may set information of a network management server in the home gateway according to a redirection attribute value returned by the redirection server, including that:
when the returned redirection attribute value is a permanent setting, the redirection management unit 62 of the home gateway may permanently modifies a connection address of the network management server; and
when the returned redirection attribute value is a temporary setting, the redirection management unit 62 of the home gateway may temporally modifies the connection address of the network management server, and the home gateway may be repeatedly reoriented when connecting to the network management server next time. After the address information of the network management server is acquired, the TR069 management unit 63 of the home gateway may connect to a real network management server through the child certificate in the certificate chain, and then the home gateway may normally connect to the network management server (i.e. the network management platform) according to the following steps shown in FIG. 8.

In Step 801, the TR069 management unit 63 of the home gateway actively connects to the network management server through the child certificate, and judges whether authentication succeeds according to a state returned by the network management server.

In Step 802, after the home gateway passes authentication, the TR069 management unit 63 of the home gateway may connect to the network management server in a certificate encryption mode, and at this moment, the network management platform may normally manage the home gateway; and if the home gateway does not pass authentication, connection fails.

Those skilled in the art should know that all or part of the steps of the abovementioned embodiment may be implemented by a flow of a computer program. The computer program may be stored in a computer-readable storage medium, the computer program is executed on a corresponding hardware platform (for example, a system, equipment, a device and an apparatus), and during execution, one or combination of the steps of the method embodiment is included.

Optionally, all or part of the steps of the abovementioned embodiment may also be implemented by virtue of an integrated circuit, these steps may be made into individual integrated circuit modules, or multiple modules or steps therein may be made into a single integrated circuit module for implementation.

Devices/function modules/function units in the abovementioned embodiments may be implemented by using a universal computing device, and they may be concentrated on a single computing device, and may also be distributed on a network consisted of multiple computing devices.

When being implemented in form of software function module and sold or used as an independent product, each device/function module/function unit in the abovementioned embodiments may be stored in a computer-readable storage medium. The abovementioned computer-readable storage medium may be a read-only memory, a magnetic disk, an optical disk or the like.

### Industrial Applicability

The embodiments of the present invention may skip for connecting to the real network management server after redirection is successfully implemented through the redirection server, additional operation pressure on the network management server and potential safety hazards caused by easy access of an illegal terminal may be avoided, and a satisfaction with a user experience may be improved.

## Claims

1. A communication management method for a home gateway, wherein a process of connecting a home gateway to a network management server comprises:
connecting the home gateway to a redirection server through redirection server connection information;
receiving, by the home gateway, real connection information of the network management server sent by the redirection server; and
connecting the home gateway to the network management server according to the real connection information of the network management server.

2. The communication management method for the home gateway according to claim 1, wherein after connecting the home gateway to the redirection server and before receiving the real connection information of the network management server, the method further comprises: sending first authentication information to the redirection server, wherein the real connection information of the network management server is sent by the redirection server after authentication based on the first authentication information succeeds.

3. The communication management method for the home gateway according to claim 2, wherein the real connection information of the network management server comprises address information of the network management server and a redirection attribute value, and the redirection attribute value comprises a permanent setting and a temporary setting;
after receiving, by the home gateway, the real connection information of the network management server sent by the redirection server and before connecting the home gateway to the network management server according to the real connection information of the network management server, the method further comprises: setting, by the home gateway, a redirection attribute of the address information of the network management server according to the redirection attribute value; and
connecting the home gateway to the network management server according to the real connection information of the network management server comprises: connecting the home gateway to the network management server according to the address information of the network management server.

4. The communication management method for the home gateway according to claim 3, wherein connecting the home gateway to the network management server according to the address information of the network management server comprises:
sending, by the home gateway, second authentication information to the network management server according to the address information of the network management server; and
after an authentication success response message fed back by the network management server is received by the home gateway, connecting the home gateway to the network management server in a certificate encryption mode.

5. The communication management method for the home gateway according to any one of claims 1-4, wherein before connecting the home gateway to the redirection server through the redirection server connection information, the method further comprises:
connecting the home gateway to an authentication server through false connection information of the network management server, and sending third authentication information to the authentication server;
receiving, by the home gateway, a redirection server connection right fed back by the authentication server after authentication based on the third authentication information succeeds; and
after the redirection server connection right is received, initiating, by the home gateway, a connection to the redirection server according to the redirection server connection information.

6. A communication management method for a home gateway, wherein a process of connecting a home gateway to a network management server comprises:
connecting the home gateway to a redirection server through redirection server connection information;
sending, by the redirection server, real connection information of the network management server to a home network; and
connecting the home gateway to the network management server according to the real connection information of the network management server.

7. A home gateway, comprising a communication connection management unit and a redirection management unit, wherein
the redirection management unit is configured to: connect to a redirection server through redirection server connection information and receive real connection information of a network management server sent by the redirection server; and
the communication connection management unit is configured to: connect to the network management server according to the real connection information of the network management server.

8. The home gateway according to claim 7, wherein the redirection management unit is further configured to: after connecting to the redirection server and before receiving the real connection information of the network management server, send first authentication information to the redirection server, wherein the real connection information of the network management server is sent by the redirection server after authentication based on the first authentication information succeeds.

9. The home gateway according to claim 8, wherein the real connection information of the network management server comprises address information of the network management server and a redirection attribute value, and the redirection attribute value comprises a permanent setting and a temporary setting; the redirection management unit is further configured to: set a redirection attribute of the address information of the network management server according to the redirection attribute value; and
the communication connection management unit is configured to: after the redirection management unit completes setting of the redirection attribute of the address information of the network management server, connect to the network management server according to the address information of the network management server.

10. The home gateway according to claim 9, wherein the communication connection management unit is configured to:
send second authentication information to the network management server according to the address information of the network management server; and
after an authentication success response message fed back by the network management server is received, connect to the network management server in a certificate encryption mode.

11. The home gateway according to any one of claims 7-10, wherein the communication connection management unit is further configured to: before the redirection management unit connects to the redirection server through the redirection server connection information, connect to an authentication server through false connection information of the network management server, send third authentication information to the authentication server, and receive a redirection server connection right fed back by the authentication server after authentication based on the third authentication information succeeds;
the redirection management unit is further configured to: after the redirection server connection right is received, initiate a connection to the redirection server according to the redirection server connection information.

12. A communication system, comprising a home gateway, a redirection server and a network management server, wherein
the home gateway is configured to: connect to the redirection server through redirection server connection information;
the redirection server is configured to: send real connection information of the network management server to a home network;
the home gateway is further configured to: connect to the network management server according to the real connection information of the network management server.

13. A computer-readable storage medium, storing computer-executable instructions which are used to execute the method according to any one of claims 1-6.
